# EUROPEAN PATENT SPECIFICATION

(11) **EP 3 308 685 B1**
(45) Date of publication and mention of the grant of the patent: **09.01.2019**
(21) Application number: 16382469.1
(22) Date of filing: 14.10.2016
(51) Int. Cl.: A47J 43/046, A47J 43/07, A47J 27/00, A47J 27/08, A47J 27/086, A47J 36/10

(54) **COOKING APPLIANCE**
KOCHVORRICHTUNG
APPAREIL DE CUISSON

(43) Date of publication of application: 18.04.2018
(73) Proprietor: Taurus Research and Development S.L.U., 25790 Oliana (ES)
(72) Inventor: TRENCH ROCA, Lluís, 08650 Sallent (ES); MONTRAVETA MONTRAVETA, Fidel, 25790 Olliana (ES); ALET VIDAL, Josep, 25790 Oliana (ES)
(74) Representative: Juncosa Miró, Jaime

(56) References cited:
- EP-A1- 1 731 068
- EP-A1- 1 905 332
- EP-A1- 2 522 261
- US-A1- 2013 075 505

## Description

### Field of the Art

The present invention generally relates to a cooking appliance and more particularly to a cooking appliance comprising a base unit having a driving unit and a heating unit and a removable vessel provided with a stirring device operated by the driving unit and a pressure-resistant closure lid suitable for cooking foods at overpressure.

### Background of the Invention

Pressure cooking foods is based on a principle whereby the boiling point of a liquid depends on pressure, the boiling point being higher the higher the pressure. Therefore, by putting foods together with a certain amount of water inside a vessel hermetically closed and subjected to heating, the water contained in the vessel partially evaporates, causing an overpressure greater than the atmospheric pressure inside the vessel, so the boiling point of the water goes above 100°C, for example up to 125°C or 130°C, and this increase in temperature causes the foods to cook faster, reducing conventional cooking times.

So-called "pressure cookers" comprising a vessel provided with a pressure-resistant closure lid, where the lid has at least one pressure-resistant closure device and a pressure regulating valve, are well known.

Patent document EP 1731068 A1 discloses a cooking appliance comprising a base unit and a removable vessel. The base unit includes a driving unit operating a stirring device contained in the vessel, a heating unit heating the vessel, and a control device. The vessel includes a vessel wall having a rim arranged around an upper opening, and a lid provided with an elastic sealing gasket which fits to the rim of the upper opening of the vessel in a closed position. The vessel further includes a safety mechanism which is operated by a safety closure element of the lid when the lid is in a closed position, and the safety mechanism interacts with the control device of the base unit to allow the operation of the driving unit and/or the heating unit only when the lid is in the closed position. A retainer retains the safety closure element of the lid in the closed position. A pushbutton releases the safety closure element from the retainer and allows opening the lid. Nevertheless, this cooking appliance is not prepared for cooking foods in overpressure conditions.

Patent document EP 2522261 A1 describes an electric cooking appliance comprising a vessel with a stirring device and a pressure-resistant closure lid and a base unit with a heating unit for heating the vessel and a driving unit for operating the stirring device. When it is arranged closing the vessel, the pressure-resistant closure lid allows reaching a working overpressure greater than the atmospheric pressure inside the vessel useful for cooking foods in overpressure conditions. This cooking appliance includes a safety valve but not a pressure regulating valve, and the working overpressure is regulated by detection means detecting the temperature or pressure inside the vessel and a control device regulating the operation of the heating unit depending on the detected temperature or pressure.

### Disclosure of the Invention

The present invention provides a cooking appliance comprising a base unit and a removable vessel, wherein the base unit includes a driving unit operating a stirring device contained in the vessel, a heating unit heating the vessel, and a control device comprising, for example, an electronic circuit, a programmable logic controller, a computer, or another similar device, in connection with the driving unit and with the heating unit, and preferably a user interface whereby a user can select and/or program different functions of the control device.

The vessel includes a vessel wall having a rim arranged around an upper opening and a lid having an elastic sealing gasket which fits to the rim of the upper opening of the vessel when the lid is in a closed position, and a safety closure element which is arranged in an active position when the lid is closed, allowing the operation of said driving unit and/or said heating unit.

The lid of the vessel is a pressure-resistant closure lid comprising, in addition to the elements described above, a pressure-resistant closure cover in which the elastic sealing gasket is installed, a pressure-resistant closure device cooperating with the rim of the upper opening of the vessel for keeping the pressure-resistant closure cover in a closed position, in which the pressure-resistant closure cover withstands a working overpressure inside the vessel of at least 1.25 times the atmospheric pressure, a regulating valve set for limiting the working overpressure to a predetermined maximum overpressure, and a safety locking element which is driven by the working overpressure to a locking position and which in the absence of working overpressure is driven by gravity to a release position. In the locking position the safety locking element locks the safety closure element in the active position and the pressure-resistant closure device in said closed position. In the release position the safety locking element does not interfere with the safety closure element and the pressure-resistant closure device is released.

In one embodiment, the pressure-resistant closure device comprises clasps movable with respect to the pressure-resistant closure cover and an opening and manually-operated closing mechanism moving the clasps between an open position, in which the clasps are outwardly separated from the rim of the upper opening of the vessel, and a closed position, in which the clasps are fastened underneath a peripheral projection associated with the rim of the upper opening of the vessel.

For example, the opening and closing mechanism comprises a rotating element installed in the pressure-resistant closure lid, cams formed in the rotating element and coupled to cam followers attached to the clasps, and a handgrip installed in the pressure-resistant closure lid in a position accessible from the outside and connected to the rotating element, such that the handgrip can be manually operated for rotating the rotating element a predetermined angle in both directions suitable for moving the clasps between the open position and the closed position by means of the cams and cam followers.

In one embodiment, the vessel further comprises a safety mechanism which is operated by the safety closure element of the lid when the lid is closed and the safety closure element is in an active position. The safety mechanism interacts with the control device of the base unit to allow the operation of the driving unit and/or the heating unit only when the safety closure element is in the active position, which means that the lid is closed.

Optionally, the vessel further includes a retainer retaining the safety closure element of the lid in the active position, and a pushbutton which, when pushed, releases the safety closure element from the retainer.

In one embodiment, the safety closure element of the pressure-resistant closure lid is movable with respect to the pressure-resistant closure cover. In such case, the safety closure element is moved by the opening and closing mechanism between an inactive position, in which the safety closure element does not interact with the safety mechanism of the vessel, and the active position, in which the safety closure element operates the safety mechanism of the vessel.

For example, the safety closure element is fixed or joined to the rotating element of the opening and closing mechanism and rotates together with the rotating element. In such case, the vessel has an outer appendage in which the safety mechanism is installed, and this outer appendage has a side opening through which the safety closure element is introduced when the safety closure element is moved to the active position for operating the safety mechanism. Therefore, in order to close the vessel, the pressure-resistant closure lid is first placed in the closed position and the handgrip of the opening and closing mechanism is then manually operated, so the clasps move to the closed position while at the same time the safety closure element moves to the active position.

In another alternative embodiment, the opening and closing mechanism is of the bayonet-type and comprises a plurality of projecting elements formed in the pressure-resistant closure lid that are secured in a corresponding plurality of projecting elements formed at the rim of the upper opening of the vessel as a result of the rotation of the pressure-resistant closure lid in relation to the vessel by a predetermined angle. In this case, the safety closure element is fixed or joined to the pressure-resistant closure lid and rotates together with the pressure-resistant closure lid between the inactive position and the active position. In the active position, the safety closure element is laterally inserted in the side opening of the appendage of the vessel and operates the safety mechanism.

In any case, in order to move the safety closure element to the active position, it is essential for the pressure-resistant closure lid and the opening and closing mechanism to be in the closed position.

In one embodiment, the safety locking element comprises a rod inserted in a vertical position in a guide hole formed on the pressure-resistant closure cover such that the rod can move freely in the guide hole. For example, an upper stop located at an upper end of the rod retains the safety locking element in the release position inside the guide hole when the safety locking element is driven downwards by gravity in the absence of overpressure inside the vessel, and a lower stop located at a lower end of the rod retains the safety locking element in the locking position inside the guide hole when the safety locking element is driven upwards against gravity by an overpressure inside the vessel.

The lower stop of the safety locking element preferably comprises a sealing element arranged around the rod. This sealing element sits around the guide hole and hermetically seals a gap between the safety locking element and the guide hole when the safety locking element is in the locking position.

The safety closure element has formed therein a locking hole which is aligned with the guide hole of the pressure-resistant closure cover when the safety closure element is in the active position. Therefore, when the safety closure element is in the active position and the safety locking element is in the locking position due to the effect of overpressure inside the vessel, the safety locking element is inserted in the locking hole of the safety closure element and locks the safety closure element in the active position.

With this device, the safety closure element prevents the opening of the pressure-resistant closure lid while there is overpressure inside the vessel. The regulating valve preferably has a manually-operable control opening the regulating valve when it is operated to allow steam existing inside the vessel to be released and to equalize the pressure inside the vessel to atmospheric pressure. As a result, if the pressure-resistant closure lid is to be opened when there is an overpressure inside the vessel, there is a need to first operate the control of the regulating valve to eliminate the overpressure and thereby allow the safety locking element to move to the release position by gravity.

Optionally, the rod of the safety locking element has an axial passage in which there is installed a safety valve which is set to open due to the effect of excessive interior overpressure greater than the working overpressure inside the vessel, and to thereby allow steam existing inside the vessel to be released through the guide hole. Alternatively, the pressure-resistant closure cover has an additional hole other than the guide hole and the safety valve is installed in this additional hole.

In one embodiment, the pressure-resistant closure lid comprises an outer cover in addition to the pressure-resistant closure cover. This outer cover is fixed to an outer side of the pressure-resistant closure cover and has the handgrip installed therein. There is at least one ventilation hole on the outer cover, such that a space comprised between the pressure-resistant closure cover and the outer cover is always at atmospheric pressure. The opening and closing mechanism, including the rotating element, the safety closure element and the clasps, is arranged in the mentioned space between the pressure-resistant closure cover and the outer cover.

The regulating valve is preferably installed in the outer cover and connected to a steam release hole formed in the pressure-resistant closure cover. Alternatively, the regulating valve is directly installed in the pressure-resistant closure cover and connected to a steam release hole formed on the pressure-resistant closure cover.

The outer appendage in which the safety mechanism is installed preferably includes a handle and the pushbutton is installed in the handle in a position accessible from the outside.

In one embodiment, the pressure-resistant closure cover has a peripheral skirt in which the elastic sealing gasket is housed, and the peripheral skirt has formed therein one or more safety release windows which are closed by the elastic sealing gasket when it is subjected to working overpressure. The elastic sealing gasket is selected such that, in the event of an excessive interior overpressure greater than a predetermined maximum overpressure occurs, the elastic sealing gasket driven by the excessive interior overpressure undergoes elastic deformation and partially emerges ejected through the safety release windows, so the steam existing inside the vessel is released through the safety release windows and the interior pressure of the vessel equalizes to the atmospheric pressure.

In one embodiment, the stirring device mentioned above, which is contained in the vessel, comprises blades fixed to a rotating shaft installed by means of a support through an opening formed in the vessel wall. Gaps existing between the rotating shaft and the support and/or between the support and the opening of the vessel wall are hermetically sealed by one or more sealing gaskets. These sealing gaskets are selected to withstand working overpressure and to allow the steam existing inside the vessel to be released when there is an excessive interior overpressure greater than a predetermined maximum overpressure.

Optionally, the vessel or the base unit comprises a detector detecting a temperature or a pressure inside the vessel, and the control device is programmed for regulating the operation of the heating unit in response to a signal representative of the temperature or pressure inside the vessel received from the detector. By means of this control of the heating unit, the overpressure inside the vessel is prevented from exceeding a predetermined maximum overpressure.

Therefore, as described above the cooking appliance of the present invention, including the vessel and the pressure-resistant closure lid, can be provided with up to five safety levels against excessive interior overpressure, namely:
Level 1 - The pressure regulating valve.
Level 2 - The safety valve.
Level 3 - The temperature regulating device associated with a temperature or pressure detector.
Level 4 - The safety release window in cooperation with the elastic sealing gasket of the pressure-resistant closure lid.
Level 5 - The sealing gaskets of the stirring device set for withstanding a predetermined maximum overpressure.

In one embodiment, the vessel further comprises a conventional closure lid having an elastic sealing gasket which fits to the rim of the upper opening of the vessel in a conventional closed position and a safety closure element which, in a closed position, operates the safety mechanism and is retained by the pushbutton. Therefore, the cooking appliance of the present invention can include the base unit, a single vessel and two alternative lids: a pressure-resistant closure lid, whereby the vessel behaves like a pressure cooking vessel; and a conventional closure lid, whereby the vessel behaves like a conventional cooking vessel.

### Brief Description of the Drawings

The foregoing and other features and advantages will be better understood based on the following detailed description of a merely illustrative and non-limiting embodiment in reference to the attached drawings, in which:
Figure 1 is a perspective view of a cooking appliance according to one embodiment of the present invention, including a base unit, a vessel and a pressure-resistant closure lid;
Figure 2 is a plan view of the cooking appliance of Figure 1;
Figure 3 is a cross-section view taken along plane III-III of Figure 2;
Figure 4 is a cross-section view taken along planes IV-IV of Figure 2;
Figures 5 and 6 are plan views of the pressure-resistant closure lid where an outer cover has been omitted to better show an opening and closing mechanism in an open position and in a closed position, respectively; and
Figure 7 is a cross-section view similar to Figure 3 showing the vessel closed with a conventional closure lid instead of the pressure-resistant closure lid.

### Detailed Description of an Embodiment

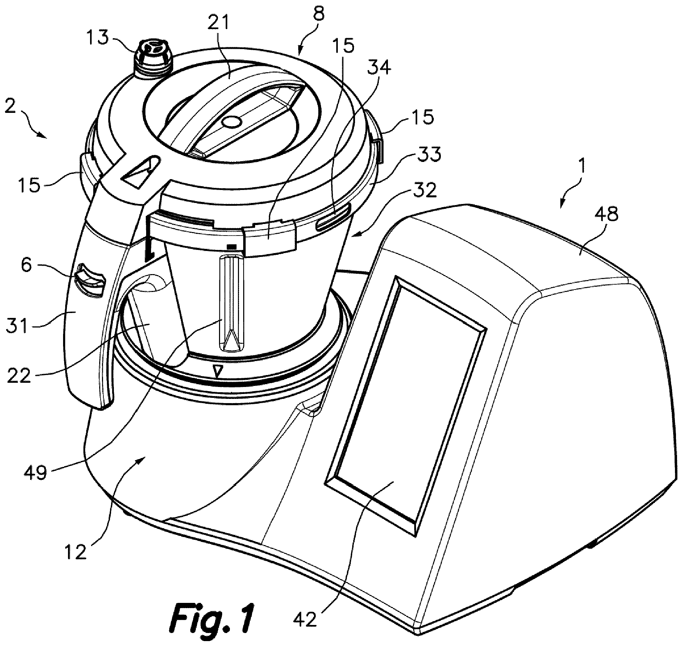

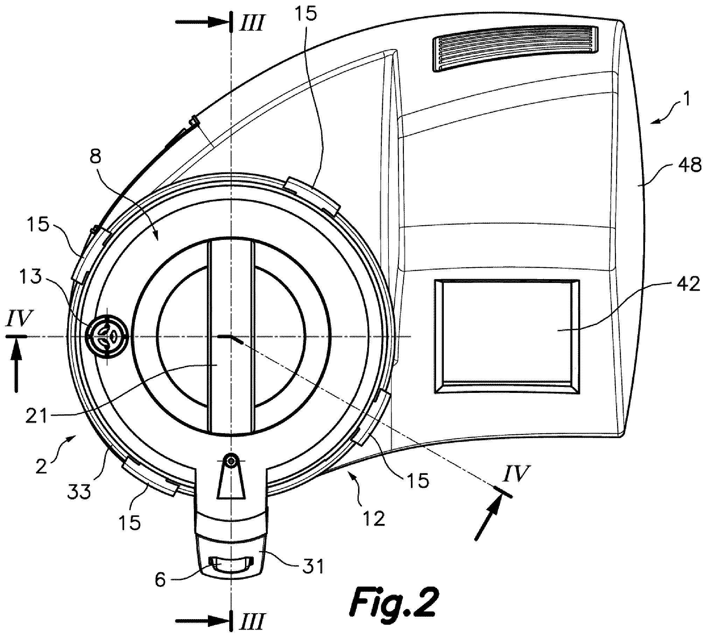

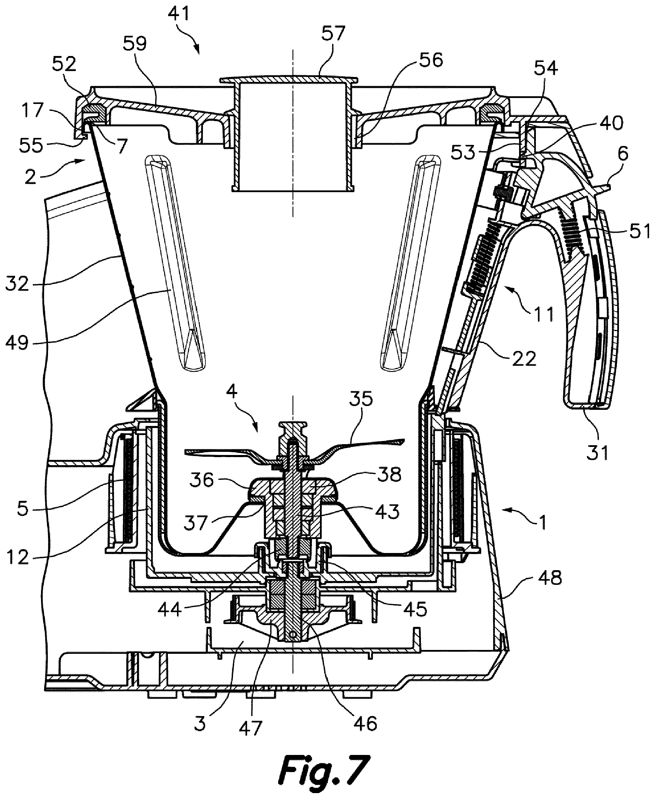

Figures 1 to 7 show a cooking appliance according to one embodiment of the present invention, which comprises a base unit 1 and a removable vessel 2. The vessel 2 includes a vessel wall 32 which can be closed by means of a pressure-resistant closure lid 8 and alternatively by means of a conventional closure lid 41 having an access opening with a limited diameter for loading solid or liquid foods in the vessel 2. Figures 1 to 6 show the vessel 2 closed by means of the pressure-resistant closure lid 8 and Figure 7 shows the vessel 2 closed by means of the conventional closure lid 41.

Referring now to Figures 1 to 6 in particular, the base unit 1 has a shell which defines a receptacle 12 configured for receiving a lower portion of the vessel 2 and houses a driving unit 3 operating a stirring device 4 contained in the vessel 2, a heating unit 5 heating the vessel 2 and a control device (not shown) which is in connection with the driving unit 3, the heating unit 5 and a user interface whereby a user can select and/or program different functions of the control device. In the shown embodiment, the user interface comprises a touch screen 42, although it may alternatively comprise different buttons and/or pushbuttons and one or more display screens.

The vessel wall 32 of the vessel 2 has an upper opening demarcated by a rim 7 and a lower portion in which there is formed, in this embodiment, an opening 37 through which a rotating shaft 43 is installed by means of a support 36. Between the rotating shaft 43 and the support 35 and/or between the support 35 and the opening 37, there are gaps which are hermetically sealed by sealing gaskets 38. The rotating shaft 43 is fixed to blades 35 inside the vessel 2 and to a vessel coupling 44 outside the vessel 2. The rotating shaft 43 and the blades 35 constitute the mentioned stirring device 4. The vessel wall 32 has ribs 49 projecting inwardly and cooperating with the stirring device 4 to create turbulences in the foods contained in the vessel 2.

A base coupling 45 fixed to a drive shaft 46 bearing a pulley 47 operated by a motor (not shown) is arranged in a lower part of the receptacle 12 of the base unit 1. The base coupling 45 fixed to a drive shaft 46 belongs to the driving unit 3 mentioned above. When the vessel 2 is placed in the receptacle 12 of the base unit 1, the vessel coupling 44 is coupled to the base coupling 45 such that the driving unit 3 can rotate the stirring device 4.

In an alternative embodiment, the driving operation could be without a drive shaft, i.e., by means of a contactless operating mechanism, for example, by means of transmitting a magnetic operating torque already known in the sector.

The pressure-resistant closure lid 8 comprises a pressure-resistant closure cover 23 and an outer cover 24 fixed to an outer side of the pressure-resistant closure cover 23. The pressure-resistant closure cover 23 has a peripheral skirt 33 in which an elastic sealing gasket 10 is housed which fits to the rim 7 of the upper opening of the vessel 2 when the lid is in a closed position.

A rotating element 18, a safety closure element 9 and clasps 15 are arranged between the pressure-resistant closure cover 23 and the outer cover 24 of the pressure-resistant closure lid 8 and a handgrip 21 connected to the rotating element 18 by a pin 58 is mounted in an accessible location on the outer side of the outer cover 24. The handgrip 21 can be manually operated to rotate the rotating element 18 a predetermined angle in both directions.

The rotating element 18, the safety closure element 9, the clasps 15 and the handgrip 21 constitute an opening and closing mechanism 16 of a pressure-resistant closure device which in cooperation with the rim 7 of the upper opening of the vessel 2 is capable of keeping the pressure-resistant closure cover 23 in a closed position, in which the pressure-resistant closure cover 23 withstands a working overpressure inside the vessel 2 higher than the atmospheric pressure. For example, the working overpressure can be from 1.25 to 1.35 times the atmospheric pressure.

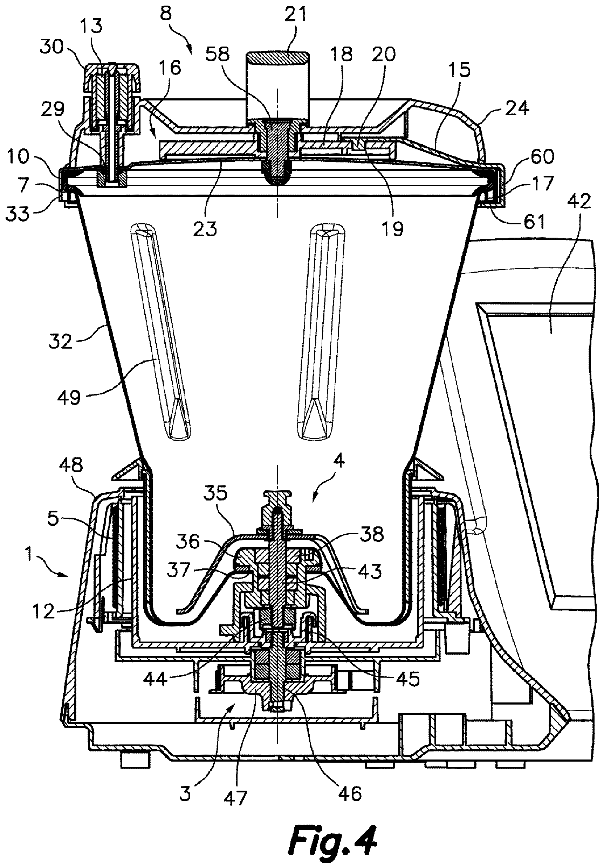

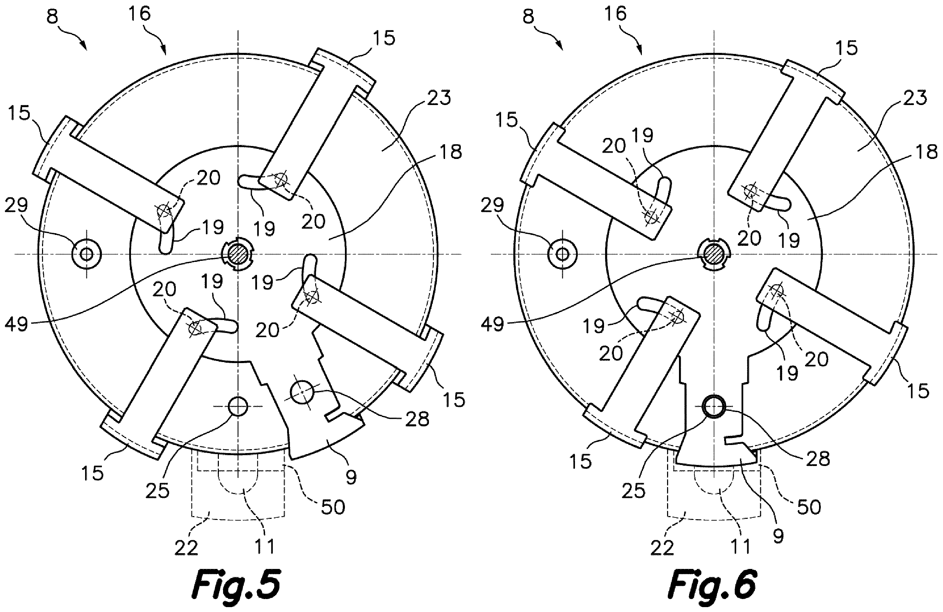

The opening and closing mechanism 16 is illustrated in Figures 5 and 6. The clasps 15 are guided by a guiding device (not shown) such that the clasps 15 are movable in radial directions between an open position (Figure 5) and a closed position (Figures 4 and 6). Each clasp 15 has a connecting element 60 extending downwards from an outer end of the clasp 15 and ending in a fastening element 61 pointing towards an inner part of the pressure-resistant closure lid 8 (Figure 4).

In the open position (Figure 5), the connecting elements 60 and fastening elements 61 of the clasps 15 are outwardly separated from the rim 7 of the upper opening of the vessel 2, and in the closed position (Figures 4 and 6), the connecting elements 60 of the clasps 15 are arranged outside the peripheral skirt 33 and the fastening elements 61 are fastened underneath a peripheral projection 17 associated with the rim 7 of the upper opening of the vessel 2.

The rotating element 18 has cams 19 in the form of slots, for example, and the clasps 15 have attached thereto cam followers 20 in the form of lugs, for example, coupled to the cams 19 (also see Figure 4). The safety closure element 9 is attached to the rotating element 18 and rotates together with the rotating element 18 between an inactive position (Figure 5) and an active position (Figure 6).

The vessel 2 has an outer appendage 22 (schematically shown by means of dashed lines in Figures 5 and 6) constituted by a shell superimposed on the vessel wall 32. In the outer appendage 22 there is installed a safety mechanism 11 which, when operated, interacts with the control device of the base unit 1 to allow the operation of the driving unit 3 and/or the heating unit 5 only if the vessel 2 is correctly closed by means of the pressure-resistant closure lid 8, or conventional closure lid 14, and if the safety closure element 9 is in the active position. The safety mechanism 11 is conventional and is not part of the present invention, so the description thereof will be omitted.

The outer appendage 22 has a side opening 50 (schematically shown by means of dashed lines in Figures 5 and 6) through which the safety closure element 9 is introduced when the safety closure element 9 is moved to the active position while at the same time the clasps 15 are moved to the closed position by the opening and closing mechanism 16. In the inactive position (Figure 5), the safety closure element 9 does not interact with the safety mechanism 11 housed in the outer appendage 22 of the vessel 2. In the active position (Figure 6), the safety closure element 9 interferes with an element of the safety mechanism 11 arranged in the outer appendage 22 and operates the safety mechanism 11.

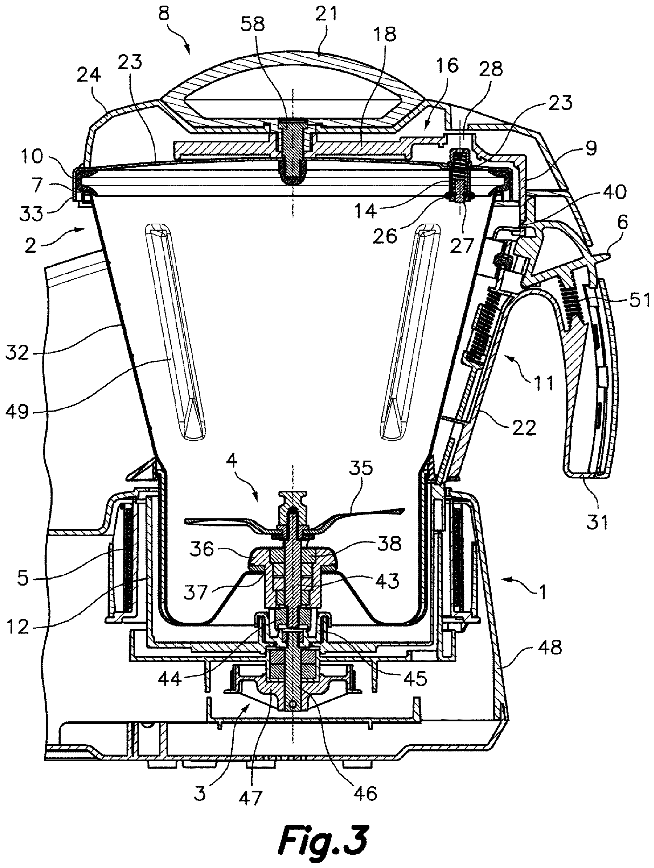

A retainer 40 elastically loaded by a spring 51 is also arranged in the outer appendage 22 (Figure 3). This retainer 40 has a projecting element which is inserted in an opening or notch of the safety closure element 9 and thereby retains the safety closure element 9 in the active position. The outer appendage 22 includes a handle 31 in which a pushbutton 6 is installed in a position accessible from the outside. The pushbutton 6 is associated with the retainer 40 such that the pushbutton 6, when manually pushed against the elastic force exerted by the spring 51, moves the retainer 40 and the safety closure element 9 becomes free. In the illustrated embodiment, the retainer 40 and the pushbutton 6 are integrated in a single body.

The pressure-resistant closure cover 23 has a guide hole 25 in which there is inserted a safety locking element 14 (Figure 3) comprising a hollow rod which can move freely in the guide hole 25. The safety locking element 14 is arranged in a vertical position and driven upwards by interior overpressure in the vessel 2 to a locking position (not shown), and in the absence of interior overpressure in the vessel 2, the safety locking element 14 is driven downwards by gravity to a release position (Figure 3).

The safety locking element 14 is kept inside the guide hole 25 by one or more stops arranged in an upper end of the rod and by a sealing element 26 arranged around a lower end of the rod. In the locking position, the sealing element 26 sits around the guide hole 25 and thereby hermetically seals a gap between the safety locking element 14 and the guide hole 25.

The safety closure element 9 has a locking hole 28 positioned such that when the safety closure element 9 is in the inactive position (Figure 5), the locking hole 28 is not aligned with the guide hole 25 of the pressure-resistant closure cover 23, and when the safety closure element 9 is in the active position (Figures 3 and 5), the locking hole 28 is aligned with the guide hole 25 of the pressure-resistant closure cover 23.

As a result, when the safety closure element 9 is in the active position and the interior overpressure in the vessel reaches a predetermined value, generally equal to or less than the working overpressure, the safety locking element 14 is driven upwards and inserted in the locking hole 28 of the safety closure element 9, locking the safety closure element 9 in the active position such that the opening and closing mechanism 16 cannot be operated even when pushing the pushbutton 6. When the interior overpressure in the vessel 2 ceases, the safety closure element 9 is driven downwards by gravity to the release position, and the safety closure element 9 is released by the safety locking element 14, such that the opening and closing mechanism 16 can then be operated for opening the clasps 15 and removing the pressure-resistant closure lid 8 once the pushbutton 6 is pushed.

The rod of the safety locking element 14 has an axial passage in which there is installed a safety valve 27 (Figure 3) set for opening automatically when the interior overpressure in the vessel 2 exceeds a predetermined maximum overpressure. The safety valve 27 acts only when the safety locking element 14 is in the locking position. The outer cover 24 has at least one ventilation hole, such that a space comprised between the pressure-resistant closure cover 23 and the outer cover 24 is at atmospheric pressure.

A regulating valve 13 which is installed in the outer cover 24 is connected to a steam release hole 29 (Figure 4) formed in the pressure-resistant closure cover 23. This regulating valve 13 is set for limiting the working overpressure to a predetermined maximum overpressure and has a control 30 that can be manually operated for opening the regulating valve 13 at will and allowing steam to be released, to thereby reduce or eliminate the overpressure inside the vessel 2.

The peripheral skirt 33 of the pressure-resistant closure cover 23 in which the elastic sealing gasket 10 is housed has formed therein one or more safety release windows 34 (Figure 1), and the elastic sealing gasket 10 is supported on the peripheral skirt 33 thereby closing the safety release windows 34 due to the effect of the working overpressure. The elastic sealing gasket 10 is selected on purpose so that it deforms elastically and emerges partially through the safety release windows 34 when the elastic sealing gasket 10 is driven by an excessive interior overpressure greater than a predetermined maximum overpressure, thereby allowing the steam of the vessel 2 to be released until eliminating the overpressure inside the vessel 2.

The sealing gaskets 38 hermetically sealing the gaps between the rotating shaft 43 and the support 35 and/or between the support 35 and the opening 37 of the stirring device 4 are selected to withstand working overpressure and to allow the steam existing inside the vessel 2 to be released when the interior overpressure is excessive and exceeds a predetermined maximum overpressure.

Additionally, the vessel 2 or the base unit 1 comprises a detector (not shown) detecting a temperature or pressure inside the vessel 2 and sending a signal representative of the temperature or pressure inside the vessel 2 to the control device. The control device is programmed for regulating the operation of the heating unit 5 in response to the signal received from the detector for the purpose of keeping the overpressure inside the vessel 2 at a suitable level, such as the working overpressure. The heating unit 5 comprises, for example, one or more electromagnetic induction coils or one or more electrical resistances.

Referring now to Figure 7, the same vessel 2 described above in relation to Figures 1 to 6 can be closed by means of the conventional closure lid 41 instead of the pressure-resistant closure lid 8. The conventional closure lid 41 comprises a covering element 59 having an elastic sealing gasket 52 which fits to the rim 7 of the upper opening of the vessel 2 in a conventional closed position, and a safety closure element 53 which in an active position operates the safety mechanism 11 of the vessel 2. The appendage 22 of the vessel 2 has an upper opening 54 through which the safety closure element is introduced 53 when the conventional closure lid 41 is closed.

The covering element 59 of the conventional closure lid 41 has a fastening element 55 at one end opposite the safety closure element 53 that is fastened underneath a peripheral projection 17 associated with the rim 7 of the upper opening of the vessel 2 before the safety closure element 53 is introduced in the upper opening 54 of the appendage 22. In the illustrated embodiment, the covering element 59, the fastening element 55 and the safety closure element 53 are integrated in a single body.

The projecting element of the retainer 40 is inserted in an opening or notch of the safety closure element 53 and thereby retains the safety closure element 53 in the active position. When pushed, the pushbutton 6 moves the retainer 40 and releases the safety closure element 53, so the conventional closure lid 41 can be opened.

The covering element 59 of the conventional closure lid 41 has a central opening 56 through which ingredients can be added into the vessel 2 when the conventional closure lid 41 is closed, and an auxiliary plug 57 with which the central opening 56 can be closed is provided.

## Claims

1. A cooking appliance comprising a base unit (1) and a removable vessel (2), wherein said base unit (1) includes:
a driving unit (3) operating a stirring device (4) contained in said vessel (2);
a heating unit (5) heating the vessel (2); and
a control device for controlling said driving and heating units,
and said vessel (2) includes:
a vessel wall (32) having a rim (7) arranged around an upper opening; and
a lid having an elastic sealing gasket (10, 52) which fits to said rim (7) of the upper opening of the vessel (2) when the lid is closed and a safety closure element (9, 53) which is arranged in an active position when the lid is closed, allowing the operation of said driving unit (3) and/or said heating unit (5);
**characterized in that** said lid is a pressure-resistant closure lid (8) further comprising:
a pressure-resistant closure device cooperating with the rim (7) of the upper opening of the vessel (2) to keep said pressure-resistant closure lid (8) in a closed position in which the pressure-resistant closure lid (8) withstands a working overpressure in the vessel (2) of at least 1.25 times the atmospheric pressure;
a regulating valve (13) set for limiting said working overpressure to a predetermined maximum overpressure; and
a safety locking element (14) which is driven by the working overpressure to a locking position in which said safety locking element (14) locks said safety closure element (9) in the active position and the pressure-resistant closure device in said closed position, and which in the absence of working overpressure is driven by gravity to a release position, in which the safety locking element (14) does not interfere with the safety closure element (9) and the pressure-resistant closure device is released.

2. The cooking appliance according to claim 1, wherein the pressure-resistant closure lid (8) comprises a pressure-resistant closure cover (23) bearing said elastic sealing gasket (10), and said pressure-resistant closure device comprises clasps (15) movable with respect to the pressure-resistant closure cover (23) and an opening and closing mechanism (16) that can be manually operated moving said clasps (15) between an open position, in which the clasps (15) are outwardly separated from the rim (7) of the upper opening of the vessel (2), and a closed position, in which the clasps (15) are fastened underneath a peripheral projection (17) associated with the rim (7) of the upper opening of the vessel (2).

3. The cooking appliance according to claim 2, wherein said opening and closing mechanism (16) comprises a rotating element (18) installed in the pressure-resistant closure lid (8), cams (19) formed in said rotating element (18) and coupled to cam followers (20) attached to the clasps (15), and a handgrip (21) installed in the pressure-resistant closure lid (8) in a position accessible from the outside and connected to the rotating element (18), said handgrip (21) being able to be manually operated for rotating the rotating element (18) a predetermined angle.

4. The cooking appliance according to claim 2 or 3, wherein the vessel (2) comprises a safety mechanism (11) which is operated by said safety closure element (9) of the lid when the lid is closed and the safety closure element (9) is in said active position, and which interacts with said control device of the base unit (1) to allow the operation of said driving unit (3) and/or said heating unit (5).

5. The cooking appliance according to claim 4, wherein said safety closure element (9) is movable with respect to the pressure-resistant closure lid (23) and is moved by said opening and closing mechanism (16) between an inactive position, in which the safety closure element (9) does not interact with the safety mechanism (11) of the vessel (2), and said active position, in which the safety closure element (9) operates the safety mechanism (11) of the vessel (2).

6. The cooking appliance according to claim 5, wherein the safety closure element (9) is fixed or joined to the rotating element (18) and rotates together with the rotating element (18), the vessel (2) has an outer appendage (22) in which the safety mechanism (11) is installed, and said outer appendage (22) has a side opening (50) through which the safety closure element (9) is introduced when it is moved to said active position for operating the safety mechanism (11).

7. The cooking appliance according to claim 6, wherein the pressure-resistant closure lid (8) further comprises an outer cover (24) which bears said handgrip (21) and which is fixed to an outer side of the pressure-resistant closure cover (23), and wherein the rotating element (18), the safety closure element (9) and the clasps (15) are arranged between the pressure-resistant closure cover (23) and said outer cover (24).

8. The cooking appliance according to claim 6 or 7, wherein the safety locking element (14) comprises a rod which is inserted in a guide hole (25) of the pressure-resistant closure cover (23) and which is freely movable in said guide hole (25), the guide hole (25) of the pressure-resistant closure cover (23) is aligned with a locking hole (28) of the safety closure element (9) when the safety closure element (9) is in the active position, and the safety locking element (14) is inserted in said locking hole (28) of the safety closure element (9) when the safety closure element (9) is in the active position and the safety locking element (14) is in said locking position.

9. The cooking appliance according to claim 8, wherein the safety locking element (14) further comprises a sealing element (26) arranged around said rod, and said sealing element (26) sits around the guide hole (15) when the safety locking element (14) is in the locking position hermetically sealing a gap between the safety locking element (14) and the guide hole (15).

10. The cooking appliance according to claim 9, wherein the rod of the safety locking element (14) has an axial passage in which a safety valve (27) is installed.

11. The cooking appliance according to any one of claims 1 to 10, wherein the vessel (2) comprises a retainer (40) retaining the safety closure element (9) in said active position, and a pushbutton (6) releasing the safety closure element (9) from said retainer (40),

12. The cooking appliance according to claim 2, wherein the pressure-resistant closure cover (23) has a hole in which a safety valve (27) is installed.

13. The cooking appliance according to claim 7, wherein the regulating valve (13) is installed in the outer cover (24) and connected to a steam release hole (29) formed in the pressure-resistant closure cover (23), or said regulating valve (13) is connected to a steam release hole (29) formed in the pressure-resistant closure cover (23).

14. The cooking appliance according to claim 13, wherein the regulating valve (13) has a manually-operable control (30) opening the regulating valve (13) when it is operated.

15. The cooking appliance according to claim 2, wherein the pressure-resistant closure cover (23) has a peripheral skirt (33) in which the elastic sealing gasket (10) is housed, and said peripheral skirt (33) has formed therein one or more safety release windows (34) through which part of the elastic sealing gasket (10) can emerge driven by an excessive interior overpressure greater than a predetermined maximum overpressure.

16. The cooking appliance according to claim 1, wherein said stirring device (4) comprises blades (35) fixed to a rotating shaft (43) installed by means of a support (36) through an opening (37) formed in the vessel wall (32) of the vessel (2), one or more sealing gaskets (38) are arranged for hermetically sealing gaps between said rotating shaft (43) and said support (35) and/or between the support (35) and said opening (37), and said sealing gaskets (38) are selected to withstand the working overpressure and to allow steam existing inside the vessel (2) to be released when the excessive interior overpressure exceeds a predetermined maximum overpressure.

17. The cooking appliance according to claim 1, wherein the vessel (2) further comprises a conventional closure lid (41) having an elastic sealing gasket (52) which fits to said rim (7) of the upper opening of the vessel (2) in a conventional closed position, a fastening element (55) that is fastened underneath a peripheral projection (17) associated with the rim (7) of the upper opening of the vessel (2), and a safety closure element (53) which in a closed position operates said safety mechanism (11).

## Patentansprüche

1. Kochvorrichtung umfassend eine Basiseinheit (1) und einen abnehmbaren Behälter (2), wobei die genannte Basiseinheit (1) Folgendes beinhaltet:
eine Antriebseinheit (3), welche eine im genannten Behälter (2) enthaltene Rührvorrichtung (4) bedient,
eine Heizeinheit (5), welche den Behälter (2) heizt; und
eine Steuervorrichtung zum Steuern der genannten Antrieb- und Heizeinheiten,
und wobei der genannte Behälter (2) Folgendes beinhaltet:
eine Behälterwand (32), welche einen um eine obere Öffnung herum angeordneten Rand (7) aufweist; und
einen Deckel, welcher eine elastische Dichtung (10, 52) aufweist, welche in den genannten Rand (7) der oberen Öffnung des Behälters (2) passt, wenn der Deckel geschlossen ist, und wobei ein Sicherheitsverschlusselement (9, 53), welches in einer aktiven Stellung angeordnet ist, wenn der Deckel geschlossen ist, die Bedienung der genannten Antriebseinheit (3) und/oder der genannten Heizeinheit (5) erlaubt,
**dadurch gekennzeichnet, dass** der genannte Deckel ein druckfester Verschlussdeckel (8) ist, welcher zusätzlich Folgendes umfasst:
eine druckfeste Verschlussvorrichtung, welche mit dem Rand (7) der oberen Öffnung des Behälters (2) zusammenarbeitet, um den genannten druckfesten Verschlussdeckel (8) in einer geschlossenen Stellung zu halten, in welcher der druckfeste Verschlussdeckel (8) einem Betriebsüberdruck im Behälter (2) von mindestens 1,25 Mal den atmosphärischen Druck standhält;
ein Regelventil (13), welches dafür eingerichtet ist, den genannten Betriebsüberdruck auf einen vorbestimmten maximalen Überdruck zu begrenzen; und
ein Sicherheitsverriegelungselement (14), welches vom Betriebsüberdruck bis zu einer Verriegelungsstellung getrieben wird, in welcher das genannte Sicherheitsverriegelungselement (14) das genannte Sicherheitsverschlusselement (9) in der aktiven Stellung und die druckfeste Verschlussvorrichtung in der genannten geschlossenen Stellung verriegelt, und welches, in Abwesenheit von Betriebsüberdruck, durch die Schwerkraft zu einer Freigabestellung getrieben wird, in welcher das Sicherheitsverriegelungselement (14) nicht mit dem Sicherheitsverschlusselement (9) störend eingreift und die druckfeste Verschlussvorrichtung freigegeben wird.

2. Kochvorrichtung nach Anspruch 1, wobei der druckfeste Verschlussdeckel (8) eine druckfeste Verschlussbedeckung (23), welche die genannte elastische Dichtung (10) trägt, und die genannte druckfeste Verschlussvorrichtung Klammern (15) umfasst, welche in Bezug auf die druckfeste Verschlussbedeckung (23) beweglich sind, und einen Öffnungs- und Schließmechanismus (16), welcher unter Bewegung der genannten Klammern (15) zwischen einer offenen Stellung, in welcher die Klammern (15) vom Rand (7) der oberen Öffnung des Behälters (2) nach außen beabstandet sind, und einer geschlossenen Stellung, in welcher die Klammern (15) unterhalb eines umfangsseitigen Vorsprungs (17) befestigt sind, welcher mit dem Rand (7) der oberen Öffnung des Behälters (2) assoziiert ist, manuell bedient werden kann, umfasst.

3. Kochvorrichtung nach Anspruch 2, wobei der genannte Öffnungs- und Schließmechanismus (16) ein drehbares Element (18), welches im druckfesten Verschlussdeckel (8) installiert ist, Nocken (19), welche im genannten drehbaren Element (18) gebildet sind und mit Nockenmitnehmern (20) gekoppelt sind, welche mit den Klammern (15) verbunden sind, und einen Handgriff (21), welcher im druckfesten Verschlussdeckel (8) in einer von außen zugänglichen Stellung und mit dem drehbaren Element (18) verbunden installiert ist, umfasst, wobei der genannte Handgriff (21) in der Lage ist, manuell bedient zu werden, um das drehbare Element (18) mit einem vorbestimmten Winkel zu drehen.

4. Kochvorrichtung nach Anspruch 2 oder 3, wobei der Behälter (2) einen Sicherheitsmechanismus (11) umfasst, welcher vom genannten Sicherheitsverschlusselement (9) des Deckels bedient wird, wenn der Deckel geschlossen ist und das Sicherheitsverschlusselement (9) in der genannten aktiven Stellung ist, und welcher mit der genannten Steuervorrichtung der Basiseinheit (1) zusammenarbeitet, um die Bedienung der genannten Antriebseinheit (3) und/oder der genannten Heizeinheit (5) zu erlauben.

5. Kochvorrichtung nach Anspruch 4, wobei das genannte Sicherheitsverschlusselement (9) in Bezug auf den druckfesten Verschlussdeckel (23) beweglich ist und vom genannten Öffnungs- und Schließmechanismus (16) zwischen einer inaktiven Stellung, in welcher das Sicherheitsverschlusselement (9) nicht mit dem Sicherheitsmechanismus (11) des Behälters (2) zusammenarbeitet, und der genannten aktiven Stellung, in welcher das Sicherheitsverschlusselement (9) den Sicherheitsmechanismus (11) des Behälters (2) bedient, bewegt wird.

6. Kochvorrichtung nach Anspruch 5, wobei das Sicherheitsverschlusselement (9) am drehbaren Element (18) befestigt oder damit gekoppelt ist und sich zusammen mit dem drehbaren Element (18) dreht, wobei der Behälter (2) einen äußeren Fortsatz (22) aufweist, in welchem der Sicherheitsmechanismus (11) installiert ist, und der genannte äußere Fortsatz (22) eine seitliche Öffnung (50) aufweist, durch welche das Sicherheitsverschlusselement (9) eingeführt wird, wenn es zur genannten aktiven Stellung für den Betrieb des Sicherheitsmechanismus (11) bewegt wird.

7. Kochvorrichtung nach Anspruch 6, wobei der druckfeste Verschlussdeckel (8) zusätzlich eine Außenbedeckung (24) umfasst, welche den genannten Handgriff (21) trägt und welche an einer Außenseite der druckfesten Verschlussbedeckung (23) befestigt ist, und wobei das drehbare Element (18), das Sicherheitsverschlusselement (9) und die Klammern (15) zwischen der druckfesten Verschlussbedeckung (23) und der genannten Außenbedeckung (24) angeordnet sind.

8. Kochvorrichtung nach Anspruch 6 oder 7, wobei das Sicherheitsverriegelungselement (14) einen Stab umfasst, welcher in ein Führungsloch (25) der druckfesten Verschlussbedeckung (23) eingesetzt wird und welcher im genannten Führungsloch (25) frei beweglich ist, wobei das Führungsloch (25) der druckfesten Verschlussbedeckung (23) mit einem Verriegelungsloch (28) des Sicherheitsverschlusselements (9) ausgerichtet ist, wenn das Sicherheitsverschlusselement (9) in der aktiven Stellung ist, und das Sicherheitsverriegelungselement (14) in das genannte Verriegelungsloch (28) des Sicherheitsverschlusselements (9) eingesetzt wird, wenn das Sicherheitsverschlusselement (9) in der aktiven Stellung ist und das Sicherheitsverriegelungselement (14) in der genannten Verriegelungsstellung ist.

9. Kochvorrichtung nach Anspruch 8, wobei das Sicherheitsverriegelungselement (14) zusätzlich ein Dichtelement (26) umfasst, welches um den genannten Stab herum angeordnet ist, und das genannte Dichtelement (26) um das Führungsloch (15) herum sitzt, wenn das Sicherheitsverriegelungselement (14) in der Verriegelungsstellung ist, unter hermetischen Abdichtung eines Spaltes zwischen dem Sicherheitsverriegelungselement (14) und dem Führungsloch (15).

10. Kochvorrichtung nach Anspruch 9, wobei der Stab des Sicherheitsverriegelungselements (14) einen axialen Durchgang aufweist, in welchem ein Sicherheitsventil (27) installiert ist.

11. Kochvorrichtung nach einem der Ansprüche 1 bis 10, wobei der Behälter (2) einen Halter (40), welcher das Sicherheitsverschlusselement (9) in der genannten aktiven Stellung hält, und einen Druckknopf (6), welcher das Sicherheitsverschlusselement (9) vom genannten Halter (40) befreit, umfasst.

12. Kochvorrichtung nach Anspruch 2, wobei die druckfeste Verschlussbedeckung (23) ein Loch aufweist, in welchem ein Sicherheitsventil (27) installiert ist.

13. Kochvorrichtung nach Anspruch 7, wobei das Regelventil (13) in der Außenbedeckung (24) installiert ist und mit einem Dampfablassloch (29) verbunden ist, welches in der druckfesten Verschlussbedeckung (23) gebildet ist, oder das genannte Regelventil (13) mit einem Dampfablassloch (29) verbunden ist, welches in der druckfesten Verschlussbedeckung (23) gebildet ist.

14. Kochvorrichtung nach Anspruch 13, wobei das Regelventil (13) eine manuell bedienbare Steuerung (30) aufweist, welche das Regelventil (13) öffnet, wenn sie bedient wird.

15. Kochvorrichtung nach Anspruch 2, wobei die druckfeste Verschlussbedeckung (23) eine umfangsseitige Schürze (33) aufweist, in welcher die elastische Dichtung (10) aufgenommen ist, und wobei die genannte umfangsseitige Schürze (33) eins oder mehrere Sicherheitsfenster (34) darin gebildet hat, durch welche ein Teil der elastischen Dichtung (10) herausragen kann, von einem übermäßigen inneren Überdruck betrieben, welcher größer als ein vorbestimmter maximaler Überdruck ist.

16. Kochvorrichtung nach Anspruch 1, wobei die genannte Rührvorrichtung (4) Schaufeln (35) umfasst, welche an einer Drehwelle (43) befestigt sind, welche mittels einer Stütze (36) durch eine in der Behälterwand (32) des Behälters (2) gebildeten Öffnung (37) installiert ist, wobei eine oder mehrere Dichtungen (38) zum hermetischen Abdichten von Spalten zwischen der genannten Drehwelle (43) und der genannten Stütze (35) und/oder zwischen der Stütze (35) und der genannten Öffnung (37) angeordnet sind, und wobei die genannten Dichtungen (38) ausgewählt werden, um dem Betriebsüberdruck standzuhalten und die Freigabe des innerhalb des Behälters (2) vorhandenen Dampfes zu erlauben, wenn der übermäßige innere Überdruck einen vorbestimmten maximalen Überdruck überschreitet.

17. Kochvorrichtung nach Anspruch 1, wobei der Behälter (2) zusätzlich einen herkömmlichen Verschlussdeckel (41), welcher eine elastische Dichtung (52) aufweist, welche in den genannten Rand (7) der oberen Öffnung des Behälters (2) in einer herkömmlichen geschlossenen Stellung passt, ein Befestigungselement (55), welches unterhalb eines umfangsseitigen Vorsprungs (17) befestigt ist, welcher mit dem Rand (7) der oberen Öffnung des Behälters (2) assoziiert ist, und ein Sicherheitsverschlusselement (53), welches in einer geschlossenen Stellung den genannten Sicherheitsmechanismus (11) bedient, umfasst.

## Revendications

1. Un appareil de cuisson comportant une unité de base (1) et un récipient amovible (2), dans lequel cette unité de base (1) comprend :
une unité d'entraînement (3) actionnant un dispositif de brassage (4) contenu dans ce récipient (2) ;
une unité de chauffage (5) chauffant le récipient (2) ; et
un dispositif de contrôle pour contrôler ces unités d'entraînement et de chauffage,
et ce récipient (2) comprend :
une paroi de récipient (32) ayant un rebord (7) aménagé autour d'une ouverture supérieure ; et
un couvercle ayant une garniture étanche élastique (10, 52) qui s'adapte à ce rebord (7) de l'ouverture supérieure du récipient (2) lorsque le couvercle est fermé et un élément de fermeture de sécurité (9, 53) qui est aménagé dans une position active lorsque le couvercle est fermé, permettant le fonctionnement de cette unité d'entraînement (3) et/ou cette unité de chauffage (5) ;
**caractérisé en ce que** ce couvercle est un couvercle de fermeture (8) résistant la pression comportant en plus :
un dispositif de fermeture résistant la pression coopérant avec le rebord (7) de l'ouverture supérieure du récipient (2) pour maintenir ce couvercle de fermeture (8) résistant la pression dans une position fermée dans laquelle le couvercle de fermeture (8) résistant la pression supporte une surpression de travail dans le récipient (2) d'au moins 1,25 fois la pression atmosphérique ;
une vanne de régulation (13) ajustée pour limiter cette surpression de travail à une surpression maximum prédéterminée ; et
un élément de verrouillage de sécurité (14) qui est entraîné par la surpression de travail à une position de fermeture dans laquelle cet élément de verrouillage de sécurité (14) verrouille cet élément de fermeture de sécurité (9) dans la position active et le dispositif de fermeture résistant la pression dans cette position fermée, et où à défaut de surpression de travail, il est entraîné par gravité à une position libérée, dans laquelle l'élément de verrouillage de sécurité (14) n'interfère pas avec l'élément de fermeture de sécurité (9) et le dispositif de fermeture résistant la pression est libéré.

2. Le dispositif de cuisson conformément à la revendication 1, dans lequel le couvercle de fermeture (8) résistant la pression comporte un couvercle de fermeture (23) résistant la pression portant cette garniture étanche élastique (10) et ce dispositif de fermeture résistant la pression comporte des fermoirs (15) amovibles par rapport au couvercle de fermeture (23) résistant la pression et un mécanisme d'ouverture et de fermeture (16) qui peut être actionné à la main déplaçant ces fermoirs (15) entre une position ouverte, dans laquelle les fermoirs (15) sont séparés vers l'extérieur du rebord (7) de l'ouverture supérieure du récipient (2), et une position fermée, dans laquelle les fermoirs (15) sont fixés au-dessous d'une saillie périphérique (17) reliée au rebord (7) de l'ouverture supérieure du récipient (2).

3. Le dispositif de cuisson conformément à la revendication 2, dans lequel ce mécanisme d'ouverture et de fermeture (16) comporte un élément rotatoire (18) installé dans le couvercle de fermeture (8) résistant la pression, des cames (19) formées dans cet élément rotatoire (18) et couplées aux suiveurs de cames (20) attachés aux fermoirs (15) et une poignée (21) installée dans le couvercle de fermeture (8) résistant la pression dans une position accessible de l'extérieur et connectées à l'élément rotatoire (18), cette poignée (21) pouvant être actionnée à la main pour faire tourner l'élément rotatoire (18), à un angle prédéterminé.

4. L'appareil de cuisson conformément à la revendication 2 ou 3, dans lequel le récipient (2) comporte un mécanisme de sécurité (11) qui est actionné par cet élément de fermeture de sécurité (9) du couvercle lorsque le couvercle est fermé et l'élément de fermeture de sécurité (9) est dans cette position active et qui interagit avec ce dispositif de contrôle de l'unité de base (1) pour permettre le fonctionnement de cette unité d'entraînement (3) et/ou cette unité de chauffage (5).

5. L'appareil de cuisson conformément à la revendication 4, dans lequel cet élément de fermeture de sécurité (9) est mobile par rapport au couvercle de fermeture (23) résistant la pression et il est déplacé par ce mécanisme d'ouverture et de fermeture (16) entre une position inactive, dans laquelle l'élément de fermeture de sécurité (9) n'interagit pas avec le mécanisme de sécurité (11) du récipient (2) et cette position active, dans laquelle l'élément de fermeture de sécurité (9) actionne le mécanisme de sécurité (11) du récipient (2).

6. L'appareil de cuisson conformément à la revendication 5, dans lequel cet élément de fermeture de sécurité (9) est fixé ou joint à l'élément rotatoire (18) et tourne avec l'élément rotatoire (18), le récipient (2) possède un appendice extérieur (22) dans lequel le mécanisme de sécurité (11) est installé et cet appendice extérieur (22) possède une ouverture latérale (50) à travers laquelle l'élément de fermeture de sécurité (9) est introduit lorsqu'il est déplacé à cette position active pour actionner le mécanisme de sécurité (11).

7. L'appareil de cuisson conformément à la revendication 6, dans lequel le couvercle de fermeture (8) résistant la pression comporte par ailleurs un couvercle extérieur (24) qui porte cette poignée (21) et qui est fixé sur un côté extérieur du couvercle de fermeture (23) résistant la pression et où l'élément rotatoire (18), l'élément de fermeture de sécurité (9) et les fermoirs (15) sont aménagés entre le couvercle de fermeture (23) résistant la pression et ce couvercle extérieur (24).

8. L'appareil de cuisson conformément à la revendication 6 ou 7, dans lequel l'élément de verrouillage de sécurité (14) comporte une tige qui est insérée dans un orifice de guidage (25) du couvercle de fermeture (23) résistant la pression et qui est librement mobile dans cet orifice de guidage (25), l'orifice de guidage (25) du couvercle de fermeture (23) résistant la pression est aligné à l'orifice de verrouillage (28) de l'élément de fermeture de sécurité (9) lorsque l'élément de fermeture de sécurité (9) est dans la position active, et l'élément de verrouillage de sécurité (14) est inséré dans cet orifice de verrouillage (28) de l'élément de fermeture de sécurité (9) lorsque l'élément de fermeture de sécurité (9) est dans la positon active et l'élément de verrouillage de sécurité (14) est dans cette position de verrouillage.

9. L'appareil de cuisson conformément à la revendication 8, dans lequel l'élément de verrouillage de sécurité (14) comporte par ailleurs un élément étanche (26) aménagé autour de cette tige et cet élément étanche (26) se pose autour de l'orifice de guidage (15) lorsque l'élément de verrouillage de sécurité (14) se trouve dans la position de verrouillage fermant hermétiquement un écart entre l'élément de verrouillage de sécurité (14) et l'orifice de guidage (15).

10. L'appareil de cuisson conformément à la revendication 9, dans lequel la tige de l'élément de verrouillage de sécurité (14) possède un passage axial dans lequel une soupape de sécurité (27) est installée.

11. L'appareil de cuisson conformément à une quelconque des revendications 1 à 10, dans lequel le récipient (2) comporte un arrêtoir (40) retenant l'élément de fermeture de sécurité (9) dans cette position active et un poussoir (6) libérant l'élément de fermeture de sécurité (9) de cet arrêtoir (40).

12. L'appareil de cuisson conformément à la revendication 2, dans lequel le couvercle de fermeture (23) résistant la pression possède un orifice dans lequel une soupape de sécurité (27) est installée.

13. L'appareil de cuisson conformément à la revendication 7, dans lequel la vanne de régulation (13) est installée dans le couvercle extérieur (24) et reliée à un orifice d'échappement de la vapeur (29) formé dans le couvercle de fermeture (23) résistant la pression ou bien cette vanne de régulation (13) est reliée à un orifice d'échappement de la vapeur (29) formé dans le couvercle de fermeture (23) résistant la pression.

14. L'appareil de cuisson conformément à la revendication 13, dans lequel la vanne de régulation (13) possède un contrôle actionnable à la main (30) ouvrant la vanne de régulation (13) lorsqu'il est actionné.

15. L'appareil de cuisson conformément à la revendication 2, dans lequel le couvercle de fermeture (23) résistant la pression possède une collerette périphérique (33) dans laquelle la garniture étanche élastique (10) est logée, et dans cette collerette périphérique (33) sont formées une ou plusieurs fenêtres d'échappement de sécurité (34) à travers lesquelles une partie de la garniture étanche élastique (10) peut émerger entraînée par une surpression intérieure excessive supérieure à la surpression maximum prédéterminée.

16. L'appareil de cuisson conformément à la revendication 1, dans lequel ce dispositif de brassage (4) comporte des lames (35) fixées sur un arbre rotatoire (43) installé au moyen d'un support (36) à travers une ouverture (37) formée dans la paroi de récipient (32) du récipient (2), une ou plusieurs garnitures (38) sont aménagées pour fermer hermétiquement les écarts entre cet arbre rotatoire (43) et ce support (35) et/ou entre le support (35) et cette ouverture (37) et ces garnitures étanches (38) sont sélectionnées pour supporter la surpression de travail et permettre que la vapeur existant à l'intérieur du récipient (2) s'échappe lorsque la surpression intérieure excessive dépasse une surpression maximum prédéterminée.

17. L'appareil de cuisson conformément à la revendication 1, dans lequel le récipient (2) comporte en plus un couvercle de fermeture conventionnel (41) ayant une garniture étanche élastique (52) qui s'adapte à ce rebord (7) de l'ouverture supérieure du récipient (2) dans une position fermée conventionnelle, un élément de fixation (55) qui est fixé au-dessous d'une saillie périphérique (17) reliée au rebord (7) de l'ouverture supérieure du récipient (2), et un élément de fermeture de sécurité (53) qui, dans une position fermée, actionne ce mécanisme de sécurité (11).
